# EUROPEAN PATENT SPECIFICATION

(11) **EP 0 589 062 B1**
(45) Date of publication and mention of the grant of the patent: **09.07.1997**
(21) Application number: 93908067.7
(22) Date of filing: 07.04.1993
(51) Int. Cl.: H01S 3/10, G01D 1/04, G05B 1/00, G05B 19/00

(54) **CONTROLLER FOR LASER OSCILLATOR**
UBERWACHUNGSEINHEIT FÜR LASEROSZILLATOREN
UNITE DE SURVEILLANCE POUR OSCILLATEUR LASER

(30) Priority: 13.04.1992 JP 92737/92
(43) Date of publication of application: 30.03.1994
(73) Proprietor: FANUC LTD., Minamitsuru-gun, Yamanashi 401-05 (JP)
(72) Inventor: WATANABE, Atsushi, Fanuc Mansion Harimomi 7-207, Minamitsuru-gun, Yamanashi 401-05 (JP); IKEDA, Yoshitaka, Fanuc Dai 3 Villa Karamatsu, Minamitsuru-gun, Yamanashi 401-05 (JP)
(74) Representative: Brunner, Michael John
(86) International application number: JP9300450
(87) International publication number: WO9321672

(56) References cited:
- JP-A- 21 189
- JP-A- 423 373
- JP-A- 1 154 580
- JP-A-63 318 180
- JP-U- 463 169
- JP-U- 463 666
- JP-U- 5 939 957

## Description

### TECHNICAL FIELD

The present invention relates to a controller for a laser beam oscillator to control the same, and more specifically, to a controller for a laser beam oscillator to manage the life of a discharge tube, oscillation lamp and the like.

### BACKGROUND ART

Conventionally, a method of ascertaining a timing at which consumable parts such as a discharge tube, oscillation lamp and the like of a laser beam oscillator must be replaced is such that consumed parts are replaced with new parts when these consumable parts completely fail and the laser beam oscillator cannot be operated or when an operation time predetermined to each of the consumable parts has elapsed.

Nevertheless, when the operation of the laser beam oscillator is actually stopped, it is not always caused by the consumption of the discharge tube, oscillation lamp and the like. Therefore, the method of replacing parts after the laser beam oscillator cannot be operated has a problem in that a job for investigating the reason why the oscillator is stopped needs considerable labor and the recovery thereof requires a long time.

Further, a degree of consumption of parts changes depending upon a laser beam output therefrom even if they are operated for the same time. Consequently, in the method of replacing parts after they have been operated for a predetermined time, there is a possibility that parts which are still sufficiently usable may be discarded.

### DISCLOSURE OF THE INVENTION

Taking the above into consideration, an object of the present invention is to provide a controller for a laser beam oscillator capable of notifying an operator of a proper timing at which consumable parts such as a discharge tube, oscillation lamp and the like must be replaced.

To solve the above problem, according to the present invention, there is provided a controller for a laser beam oscillator to control the same, which comprises a laser beam output calculation means for calculating values obtained by multiplying instantaneous output laser beam values and operating times of the laser beam oscillator and calculating an integrated laser beam output value obtained by integrating all the multiplied values since the replacement of a part of the laser beam oscillator, an operating time calculation means for calculating an integrated operating time value obtained by integrating all the operating times since the replacement of the part, and a teaching means for notifying an operator of a degree of consumption of the part based on the integrated laser beam output value and the integrated operating time value.

The laser beam output calculation means calculates values obtained by multiplying instantaneous output laser beam values and operating times of the laser beam oscillator and calculates an integrated laser beam output value obtained by integrating all the multiplied values since the replace bent of a part of the laser beam oscillator. The operating time calculation means calculates an integrated operating time value obtained by integrating all the operating times since the replacement of the part. Then, the teaching means notifies an operator of the degree of consumption of the part based on the integrated laser beam output value and the integrated operating time value. As a result, the operator can properly determine the degree of consumption of parts.

### BRIEF DESCRIPTION OF THE DRAWINGS

Figure 1 is a block diagram showing the arrangement of a robot controller on which a laser beam oscillator is mounted; and
Figure 2 is a flowchart showing a procedure for managing the life of parts of the laser beam oscillator.

### BEST MODE OF CARRYING OUT THE INVENTION

An embodiment of the present invention will be described below with reference to the drawings.

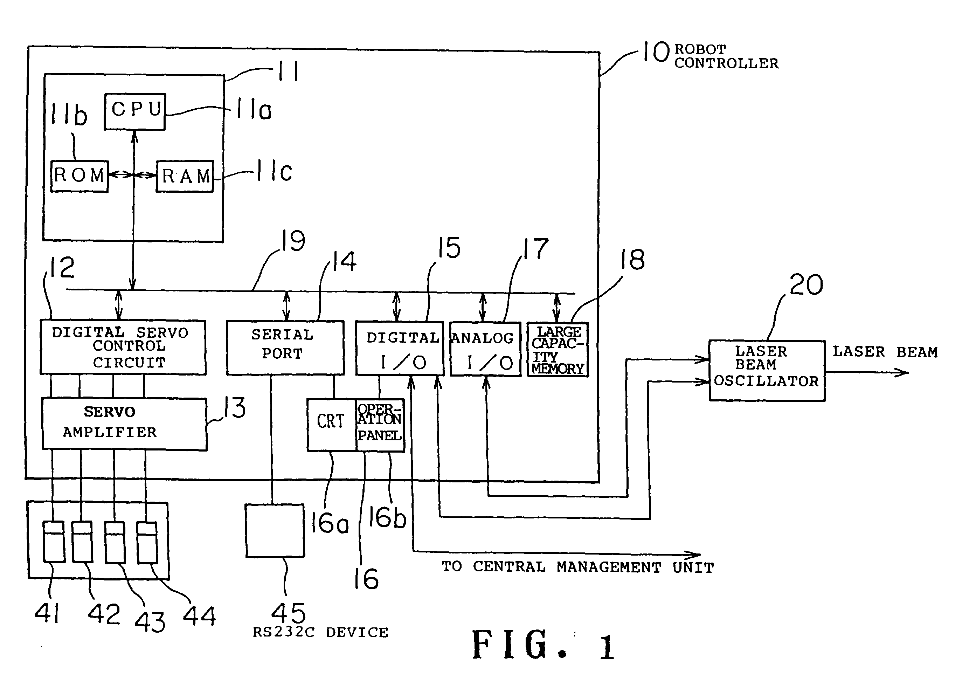

Figure 1 is a block diagram showing the arrangement of a robot controller on which a laser beam oscillator is mounted. The robot controller 10 includes a processor board 11 disposed therein and the processor board 11 includes a processor 11a, ROM 11b and RAM 11c. The processor 11a controls the robot controller 10 as a whole in accordance with a system program stored in the ROM 11b.

The RAM 11c stores various kinds of data, the operation program of a not shown robot, the output command program to the laser beam oscillator 20, and the like. A portion of the RAM 11c is arranged as a non-volatile memory which stores the operation program, output command program and the like. Further, the non-volatile memory also stores a life management program to be described later and the data of an integrated operating time value, the data of an integrated laser beam output value and the like each needed by the life management program.

A digital servo control circuit 12, serial port 14, digital I/O unit 15, analog I/O unit 17 and large capacity memory 18 are connected to the processor board 11 through a bus 19.

The digital servo control circuit 12 controls servo motors 41, 42, 43 and 44 for operating the respective axes of the robot, through a servo amplifier 13 in response to a command from the processor board 11.

The serial port 14 is connected to another RS232C device 45. Further, the CRT 16a on an operator's panel 16 is connected to the serial port 14. The CRT 16a displays an integrated laser output value and integrated operating time value since the replacement of respective parts of the laser beam oscillator 20 such as a discharge tube, oscillation lamp and the like. Here, the integrated laser beam output value is determined by summing values obtained by multiplying instantaneous output values of the laser beam oscillator 20 by the operating times thereof since the replacement of a part. In addition, the integrated operating time value is the total operating time of the laser beam oscillator 20 since the replacement of the part. The integrated laser beam output value and integrated operating time value are calculated and displayed for each part. Further, when the life of each part expires, an alarm is displayed.

The operation panel 16b of the operator's panel 16 is connected to the digital I/O unit 15. A not shown alarm lamp is provided with the operation panel 16b and lit when the life of parts such as the discharge tube and the like expires. Further, the digital I/O unit 15 is connected to a central management unit for controlling a factory as a whole and to other peripheral units and transmits a signal to and receives a signal from these units. The digital I/O unit 15 is further connected to the laser beam oscillator 20, and transmits a digital signal to and receives a digital signal from the laser beam oscillator 20. This digital signal includes the data of laser machining conditions to be output to the laser beam oscillator 20, a laser beam output sensing signal input from a not shown laser beam output sensor attached to the discharge tube, and the like.

The analog I/O unit 17 is used to output an analog signal to the laser beam oscillator 20. The laser beam oscillator 20 outputs a laser beam in accordance with the analog signal. The output laser beam is transmitted to a robot hand through a transmission pipe and irradiated to a workpiece. The large capacity memory 18 stores teaching data, the data base of a machining condition menu, and the like.

Next, the life management control of parts of the laser beam oscillator 20 effected by the robot controller 10 arranged as described above will be described.

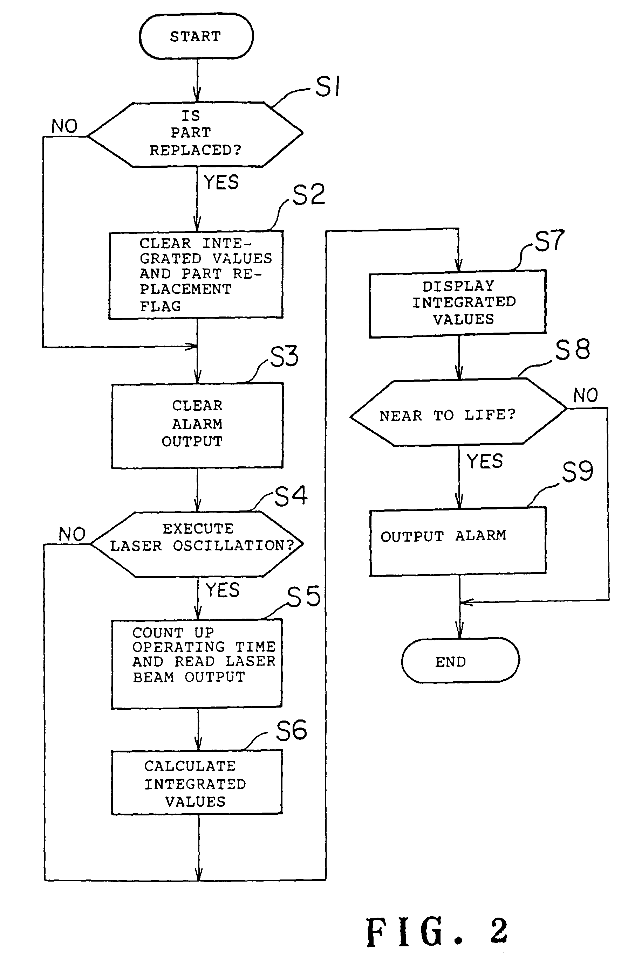

Figure 2 is a flowchart showing a procedure for managing the life of the parts of the laser beam oscillator 20.
[S1] Whether a consumed part is replaced with a new one or not is determined, and when the used part is replaced, the flow goes to step S2, and when it is not replaced, the flow goes to step S3.
[S2] The integrated laser beam output value and integrated operating time value of the replaced part each calculated before the replacement thereof and a part replacement flag on a program are cleared.
[S3] An alarm output is cleared.
[S4] It is determined whether or not the laser beam oscillator 20 is operated and executes laser oscillation, and if so, the flow goes to step S5, and if not so, the flow goes to step S7.
[S5] The operating time of the laser beam oscillator 20 since the replacement of the part is counted up and a laser beam output sensing signal is read from the laser output sensor.
[S6] The integrated operating time value and integrated laser beam output value of the laser beam oscillator 20 are calculated since the replacement of the part.
[S7] The respective integrated values calculated at step S6 are displayed on the CRT 16a. As a display example at this time, the integrated operating time value is displayed in a unit of hour (h), whereas the integrated laser beam output value is displayed in a unit of kilowatt/hour (kw/h). In addition, the integrated operating time value and integrated laser beam output value are displayed with respect to each part.
[S8] A difference between the integrated laser beam output value and a preset laser beam output life determination value and a difference between the integrated operating time value and a preset operating time life determination value are calculated and when both of these values are equal to or less than predetermined values, the life of the part is determined to be near to its expiring time and the flow goes to step S9. On the other hand, when the life of the part is not near to its expiring time, the flowchart is finished.
[S9] An alarm is output so that the CRT 16a displays the alarm and the alarm lamp on the operation panel 16b is lit.

As described above, according to the present invention, since the integrated operating time value and integrated laser beam output value of the laser beam oscillator 20 are calculated since the replacement of a part and an alarm is output by determining the life of the part from these values, a degree of consumption of the part can be securely found in proportion to the operating frequency of the part. Therefore, a consumed part can be replaced at a proper timing as well as the laser beam oscillator 20 can be prevented from being disabled by the consumed part. Further, when the laser beam oscillator 20 is disabled, whether it is caused by the consumption of a part or not can be securely determined. As a result, the maintenance of the laser beam oscillator 20 can be executed easily.

Note, although the laser beam oscillator 20 is connected to the robot controller 10 in the present embodiment, this embodiment can be also applied to the case in which the laser beam oscillator 20 is connected to a numerical control apparatus and the like.

Further, although a laser beam output sensing signal from the laser beam output sensor is used as a parameter showing a laser beam output, an output command signal from the robot controller 10 to the laser beam oscillator 20, a voltage value imposed on the discharge tube or the like may be also used in addition to the above signal.

As described above, according to the present invention, since the integrated values of the laser beam output and operating time are calculated, respectively, since the replacement of a part of the laser beam oscillator and a degree of consumption of the part is notified to an operator, the degree of consumption of the part can be securely found in proportion to the operating frequency thereof.

Consequently, consumed parts can be replaced at a proper timing as well as the laser beam oscillator can be prevented from being disabled by the consumed parts. Further, when the operation of the laser beam oscillator is disabled, whether it is caused by the consumption of parts or not can be securely determined.

Therefore, maintenance can be executed easily.

## Claims

1. A controller for a laser beam oscillator to control the same, comprising:
a laser beam output calculation means for calculating values obtained by multiplying instantaneous output laser beam values and operating times of said laser beam oscillator and calculating an integrated laser beam output value obtained by integrating all the multiplied values since the replacement of a part of said laser beam oscillator;
an operating time calculation means for calculating an integrated operating time value obtained by integrating all the operating times since the replacement of said part; and
a teaching means for notifying an operator of a degree of consumption of said part based on said integrated laser beam output value and said integrated operating time value.

2. A controller for a laser beam oscillator according to claim 1, wherein said teaching means includes a display means for displaying said integrated laser beam output value and said integrated operating time value on a screen.

3. A controller for a laser beam oscillator according to claim 1, wherein said teaching means includes a life calculation means for calculating a laser beam output setting value as a difference between said integrated laser beam output value and a preset laser beam output life determination value and an operating time setting value as a difference between said integrated operating time value and a preset operating time life determination value and an alarm means for issuing an alarm by alarm when said laser beam output setting value and said operating time setting value are equal to or less than predetermined values, respectively.

4. A controller for a laser beam oscillator according to claim 1, wherein an output command value to said laser beam oscillator is used as said instantaneous output laser beam value.

5. A controller for a laser beam oscillator according to claim 1, wherein an instantaneous output laser beam value sensed by an output sensor mounted on laser beam oscillator is used as said instantaneous output laser beam value.

6. A controller for a laser beam oscillator according to claim 1, wherein an instantaneous output laser beam value calculated from a voltage value imposed on a discharge tube of said laser beam oscillator is used as said instantaneous output laser beam value.

## Patentansprüche

1. Überwachungseinheit für einen Laserstrahloszillator mit folgenden Bauteilen:
einer Laserstrahl-Leistungsberechnung zum Berechnen von Werten, die man durch Multiplizieren momentaner Laserleistungswerte und Betriebszeiten des Laserstrahloszillators erhält und zum Berechnen eines integrierten Laserstrahl-Leistungswertes, den man durch Integrieren aller multiplizierten Werte nach Auswechseln eines Teils des Laserstrahloszillators erhält;
einer Betriebszeitberechnung zum Berechnen eines integrierten Betriebszeitwertes, den man durch Integrieren aller Betriebszeiten nach dem Auswechseln dieses Teils erhält, und
Mitteln zum Benachrichtigen von Personal, daß basierend auf dem integrierten Laserstrahl-Leistungswert und dem integrierten Betriebszeitwert ein bestimmter Abnutzungsgrad dieses Teils eingetreten ist.

2. Überwachungseinheit für einen Laserstrahloszillator nach Anspruch 1, bei dem die Benachrichtigungsmittel eine Anzeige aufweisen, um den integrierten Laserstrahl-Leistungswert und den integrierten Betriebszeitwert auf einem Bildschirm anzuzeigen.

3. Überwachungseinheit für einen Laserstrahloszillator nach Anspruch 1, bei dem die Benachrichtigungsmittel eine Lebensdauerberechnung aufweisen, um einen Einstellwert für eine Laserstrahlleistung als Differenz zwischen dem integrierten Laserstrahl-Leistungswert und einem voreingestellten Lebensdauerwert für eine Laserstrahlleistung zu berechnen, und um ferner einen Einstellwert für die Betriebszeit als Differenz zwischen dem integrierten Betriebszeitwert und einem voreingestellten Lebensdauerwert für die Betriebszeit zu berechnen, und bei dem Mittel zum Auslösen eines Alarms vorgesehen sind, wenn der Einstellwert für die Laserstrahlleistung und der Einstellwert für die Betriebszeit gleich oder kleiner als die jeweilig vorbestimmten Werte sind.

4. Überwachungseinheit für einen Laserstrahloszillator nach Anspruch 1, bei dem ein Leistungsollwert für den Laserstrahloszillator als momentaner Laserstrahl-Leistungswert benutzt wird.

5. Überwachungseinheit für einen Laserstrahloszillator nach Anspruch 1, bei dem ein momentaner Laserstrahl-Leistungswert, der von einem Leistungssensor am Laserstrahloszillator gemessen wird, als momentaner Laserstrahl-Leistungswert benutzt wird.

6. Überwachungseinheit für einen Laserstrahloszillator nach Anspruch 1, bei dem ein momentaner Laserstrahl-Leistungswert, der aus einem dem Entladungsrohr des Laserstrahloszillators aufgedrückten Spannungswert berechnet wird, als momentaner Laserstrahl-Leistungswert benutzt wird.

## Revendications

1. Unité de commande d'oscillateur à faisceau laser, pour commander ce dernier, comprenant:
un moyen de calcul du faisceau laser de sortie, pour calculer des valeurs obtenues en multipliant des valeurs instantanées du faisceau laser de sortie et des durées de fonctionnement dudit oscillateur à faisceau laser, et en calculant une valeur intégrée du faisceau laser de sortie obtenue en intégrant toutes les valeurs multipliées depuis le remplacement d'une partie dudit oscillateur à faisceau laser;
un moyen de calcul de la durée de fonctionnement, pour calculer une valeur intégrée de la durée de fonctionnement, obtenue en intégrant toutes les durées de fonctionnement depuis le remplacement de ladite partie; et
un moyen d'information pour indiquer à un opérateur un degré d'usure de ladite partie, sur base de ladite valeur intégrée du faisceau laser de sortie et de ladite valeur intégrée de la durée de fonctionnement.

2. Unité de commande d'oscillateur à faisceau laser selon la revendication 1, dans lequel ledit moyen d'information comprend un moyen d'affichage, pour afficher sur un écran ladite valeur intégrée du faisceau laser de sortie et ladite valeur intégrée de la durée de fonctionnement.

3. Unité de commande d'oscillateur à faisceau laser selon la revendication 1, dans lequel ledit moyen d'information comprend un moyen de calcul de la durée de vie, pour calculer une valeur de réglage du faisceau laser de sortie en tant que différence entre ladite valeur intégrée du faisceau laser de sortie et une valeur préréglée de détermination de la durée de vie du faisceau laser de sortie, et une valeur de réglage de la durée de fonctionnement en tant que différence entre ladite valeur intégrée de la durée de fonctionnement et une valeur préalablement fixée de détermination de la durée de vie de fonctionnement, et un moyen d'avertissement pour délivrer un signal d'alerte lorsque ladite valeur de réglage du faisceau laser de sortie et ladite valeur de réglage de la durée de fonctionnement sont égales ou inférieures à des valeurs prédéterminées correspondantes.

4. Unité de commande d'oscillateur à faisceau laser selon la revendication 1, dans lequel une valeur de commande de la sortie dudit oscillateur à faisceau laser est utilisée comme dite valeur instantanée du faisceau laser de sortie.

5. Unité de commande d'oscillateur à faisceau laser selon la revendication 1, dans lequel une valeur instantanée du faisceau laser de sortie, détectée par un détecteur de sortie monté sur l'oscillateur à faisceau laser, est utilisée comme dite valeur instantanée du faisceau laser de sortie.

6. Unité de commande d'oscillateur à faisceau laser selon la revendication 1, dans lequel une valeur instantanée du faisceau laser de sortie, calculée à partir d'une valeur de la tension appliquée sur un tube à décharge dudit oscillateur à faisceau laser, est utilisée comme dite valeur instantanée du faisceau laser de sortie.
